# EUROPÄISCHE PATENTSCHRIFT

(11) **EP 2 614 267 B1**
(45) Veröffentlichungstag und Bekanntmachung des Hinweises auf die Patenterteilung: **22.04.2015**
(21) Anmeldenummer: 11773669.4
(22) Anmeldetag: 05.09.2011
(51) Int. Cl.: F16D 3/50

(54) **DREHELASTISCHE WELLENKUPPLUNG**
TORSIONALLY ELASTIC SHAFT COUPLING
ACCOUPLEMENT D'ARBRES ÉLASTIQUE EN ROTATION

(30) Priorität: 06.09.2010 DE 202010012227 U
(43) Veröffentlichungstag der Anmeldung: 17.07.2013
(73) Patentinhaber: Hackforth GmbH, 44653 Herne (DE)
(72) Erfinder: BUSCH, Wolfgang, 45888 Gelsenkirchen (DE)
(74) Vertreter: Isfort, Olaf
(86) Internationale Anmeldenummer: PCT/EP2011/004463
(87) Internationale Veröffentlichungsnummer: WO 2012/031733

(56) Entgegenhaltungen:
- EP-A1- 1 367 278
- EP-A1- 1 662 161
- CH-A- 332 936
- CH-A- 353 584
- DE-C1- 4 403 477
- DE-U1- 9 304 497

## Beschreibung

Die Erfindung betrifft eine drehelastische Wellenkupplung mit
- einem Antriebsflansch und einem Abtriebsflansch, jeweils zum Verbinden der Wellenkupplung mit benachbarten Maschinenelementen,
- zwei in Reihe geschalteten elastischen Kupplungskörpern und
- einem Zwischenglied, das über den ersten Kupplungskörper mit dem Antriebsflansch und über den zweiten Kupplungskörper mit dem Abtriebsflansch verbunden ist,
wobei Drehmomente, unter relativer Verdrehung von Antriebsflansch und Zwischenglied, vom Antriebsflansch über den ersten Kupplungskörper auf das Zwischenglied und von dort, unter relativer Verdrehung von Zwischenglied und Abtriebsflansch, vom Zwischenglied über den zweiten Kupplungskörper auf den Abtriebsflansch übertragen werden, wobei die beiden Kupplungskörper unterschiedliche Steifigkeiten aufweisen, wobei der relative Verdrehwinkel zwischen Antriebsflansch und Zwischenglied durch einen elastisch federnden Anschlag begrenzt ist.

Drehelastische Wellenkupplungen werden zur Übertragung von Drehmomenten in Antriebssträngen zwischen einem Motor und einer Arbeitsmaschine eingesetzt, um Drehschwingungen innerhalb des Antriebsstrangs zu dämpfen. Ein typischer Anwendungsfall ist der Antriebsstrang eines Schiffes zwischen Motor und Propeller. Wellenkupplungen werden mit ihrem Antriebsflansch bzw. mit ihrem Abtriebsflansch an die benachbarten Maschinenelemente angeflanscht, wie beispielsweise an die Schwungscheiben eines Motors oder an eine Welle. Unter Last verdrehen sich Antriebs- und Abtriebsflansch relativ zueinander, so dass die Kupplungskörper elastisch verformt werden. Die Kupplungskörper werden dabei im Wesentlichen in Scherrichtung belastet.

Insbesondere bei Schiffsantrieben werden drehelastische Wellenkupplungen benötigt, die eine progressive Kennlinie der Drehsteifigkeit aufweisen. Dies bedeutet, dass der relative Verdrehwinkel zwischen Antriebs- und Abtriebsflansch mit steigendem Drehmoment zunächst stark ansteigt, im Bereich des Nenndrehmoments jedoch nur noch schwach zunimmt. Im Bereich des Nenndrehmoments (Volllastbereich) ist die Kupplung demnach deutlich steifer als im Schwach- oder Teillastbereich ausgelegt. Diese nicht lineare Kennlinie wird benötigt, um das Dämpfungsverhalten der Kupplung ideal an die zu übertragene Last anpassen zu können. Im Teillastbereich, wo gerade bei Schiffsantrieben eine hohe Schwingungsanregung zu erwarten ist, wird eine höhere Dämpfung benötigt als im Volllastbereich.

Eine drehelastische Wellenkupplung der eingangs angegebenen Art ist aus der DE 10 2006 045 614 A1 bekannt. Bei der vorbekannten Wellenkupplung kommen zwei in Reihe geschaltete elastische Kupplungskörper zum Einsatz. Der erste Kupplungskörper wird nur im Schwach- oder Teillastbereich beansprucht. Bei Erreichen eines bestimmten Mindestwertes des übertragenen Drehmoments wird der erste Kupplungskörper mit Hilfe eines starren Anschlags überbrückt. Der Mindestwert des Drehmoments, ab dem der starre Anschlag wirksam wird, ist über die Steifigkeiten der Kupplungskörper mit einem entsprechenden relativen Verdrehwinkel zwischen Antriebsflansch und Zwischenglied verknüpft.

Ferner ist eine drehelastische Wellenkupplung der eingangs angegebenen Art aus der DE 44 03 477 C1 bekannt. Dabei handelt es sich um eine dreistufige drehelastische Wellenkupplung mit einer ersten hochdrehelastischen Kupplungsstufe für den Leerlauf oder unteren Teillastbetrieb, einer phasenversetzt dazu hintereinander geschalteten drehsteifen zweiten Kupplungsstufe und einer wiederrum drehweichen dritten Kupplungsstufe, die bei höherer Teillast bis Volllast die drehelastischen Eigenschaften des gesamten Kupplungssystems prägt.

Die bekannten Wellenkupplungen haben den Nachteil, dass der starre Anschlag beim Übergang vom Schwachlast- in den Teillast- bzw. Volllastbereich zu Getriebegeräuschen eines im Antriebsstrang vorhandenen Getriebes führt.

Aufgabe der Erfindung ist es demnach, eine drehelastische Wellenkupplung bereitzustellen, die eine progressive Kennlinie aufweist und bei deren Einsatz Getriebegeräusche vermieden werden.

Diese Aufgabe löst die Erfindung ausgehend von einer drehelastischen Wellenkupplung der eingangs angegebenen Art dadurch, dass der elastisch federnde Anschlag durch mehrere Federelemente gebildet ist, die jeweils einen mit dem Zwischenglied starr verbundenen Zylinder, dessen Achse im Wesentlichen in Umfangsrichtung der Wellenkupplung ausgerichtet ist, und einen in dem Zylinder längs beweglich geführten, mit Federkraft beaufschlagten Kolben umfassen.

Wie bei der aus dem Stand der Technik bekannten drehelastischen Wellenkupplung weist die erfindungsgemäße Wellenkupplung zwei in Reihe geschaltete elastische Kupplungskörper auf, die unterschiedliche Steifigkeiten aufweisen. Der Kupplungskörper mit der geringeren Steifigkeit ist vor allen im Schwach- und Teillastbereich aktiv, während der Kupplungskörper mit der größeren Steifigkeit im Volllastbereich die Drehmomentübertragung übernimmt. Im Schwach- bzw. Teillastbereich ist somit die Kupplung weich ausgelegt. Beim Erreichen des Anschlags wird zusätzlich zur Elastizität des ersten Kupplungskörpers die Elastizität des Anschlags wirksam, so dass die elastische Verformung des ersten Kupplungskörpers mit zunehmendem Drehmoment schwächer ansteigt. Mit steigendem Drehmoment entfaltet zunehmend der zweite Kupplungskörper seine dämpfende Wirkung. Der federnde Anschlag sorgt dafür, dass die Drehsteifigkeit der Wellenkupplung bei zunehmendem Drehmoment mehr oder weniger stetig in einen der Steifigkeit des zweiten Kupplungskörpers entsprechenden Wert übergeht. Demgegenüber steigt bei der vorbekannten Drehelastischen Wellenkupplung die Drehsteifigkeit aufgrund des starren Anschlags sprunghaft an. Dieser sprunghafte Anstieg der Drehsteifigkeit ist die Ursache für die nachteiligen Getriebegeräusche. Diese werden durch den erfindungsgemäß stetigen Übergang der Drehsteifigkeit effektiv vermieden. Der elastisch federnde Anschlag ist durch mehrere Federelemente gebildet, die jeweils einen mit dem Zwischenglied starr verbundenen Zylinder, dessen Achse im Wesentlichen in Umfangsrichtung der Wellenkupplung ausgerichtet ist, und einen in dem Zylinder längs beweglich geführten, mit Federkraft beaufschlagten Kolben umfassen. Es handelt sich um eine besonders einfache Konstruktion, die zudem flexibel an verschiedene Auslegungen angepasst werden kann. Die Zahl der Federelemente kann variiert werden. Je nach Dimension der Kupplung kann eine entsprechende Zahl von Federelementen, beispielsweise in Umfangsrichtung der Kupplung hintereinander angeordnet, verbaut werden. Die aus Zylinder, Kolben und Feder bestehenden Federelemente können als einfach montierbare Komponenten vorgefertigt werden.

Zweckmäßigerweise sind die Federelemente so ausgelegt, dass sie jeweils zwei den Hub des Kolbens begrenzende Endanschläge aufweisen. Dabei drängt die Federkraft den Kolben in eine maximal ausgefahrene Stellung. Bei zunehmendem Drehmoment werden Antriebsflansch und Zwischenglied relativ zueinander verdreht. Dabei wird der Kolben gegen die Federkraft in den Zylinder eingefahren. Der maximale relative Verdrehwinkel zwischen Antriebsflansch und Zwischenglied ist erreicht, wenn die Kolben der Federelemente entgegen der Federkraft maximal eingefahren sind. Dabei wirken bei einer bevorzugten Ausgestaltung mehrere mit dem Antriebsflansch starr verbundene Vorsprünge in Umfangsrichtung der Kupplung auf die Kolben der Federelemente ein. Vorzugsweise wirken die Vorsprünge erst ab Erreichen eines Mindestwertes des über die Wellenkupplung übertragenen Drehmoments auf die Kolben ein. Auf diese Weise können den unterschiedlichen Lastbereichen unterschiedliche Drehsteifigkeiten der Kupplung zugeordnet werden. Im Schwachlastbereich wirken die mit dem Antriebsflansch verbundenen Vorsprünge noch nicht auf die Kolben ein. Somit sind die Federelemente noch nicht wirksam. In diesem Bereich ist die Drehsteifigkeit der Wellenkupplung durch die beiden in Reihe geschalteten Kupplungskörper bestimmt. Da in der Regel der zweite Kupplungskörper deutlich steifer ausgelegt ist als der erste Kupplungskörper, entspricht die Drehsteifigkeit im Schwachlastbereich im Wesentlichen der Steifigkeit des ersten Kupplungskörpers. Ab Erreichen des Mindestwerts des Drehmoments, d. h. ab Erreichen des Teillastbereichs werden die Federelemente aktiv. In diesem Bereich sind der erste Kupplungskörper und die Federelemente gleichsam parallel geschaltet. Dabei sind die Federelemente sinnvollerweise so ausgelegt, dass die Drehsteifigkeit der Wellenkupplung insgesamt im Teillastbereich größer ist als im Schwachlastbereich, jedoch immer noch kleiner als im Volllastbereich. Im Volllastbereich sind die Kolben der Federelemente maximal eingefahren. Die Kolben befinden sich somit an ihren Endanschlägen. Das bedeutet, dass im Volllastbereich nur noch der zweite Kupplungskörper aktiv ist. Die Drehsteifigkeit ist maximal und entspricht der Steifigkeit des zweiten Kupplungskörpers. Zur Auslegung der Kupplung kann der relative Verdrehwinkel zwischen Antriebsflansch und Zwischenglied bei Erreichen des Mindestwertes des Drehmoments, d. h. bei Erreichen des Teillastbereichs entsprechend vorgegeben werden. Dieser beträgt bis zu 10%, vorzugsweise bis zu 20%, besonders bevorzugt bis zu 50% des maximalen relativen Verdrehwinkels. Der maximale relative Verdrehwinkel zwischen Antriebsflansch und Zwischenglied bestimmt, wie oben erläutert, den Übergang in den Volllastbereich.

Bei einer besonders kompakten Realisierung der erfindungsgemäßen Wellenkupplung sind der erste und der zweite Kupplungskörper koaxial zur Drehachse der Wellenkupplung angeordnet, wobei sich der erste Kupplungskörper in radialer Richtung gesehen innerhalb des zweiten Kupplungskörpers befindet und wobei die Federelemente zwischen den Kupplungskörpern angeordnet sind. Die Drehmomentübertragung erfolgt bei dieser Ausgestaltung vom Antriebsflansch, d. h. von innen radial nach außen zum Abtriebsflansch. Je nach Lastbereich erfolgt die Drehmomentübertragung vom Antriebsflansch über den ersten Kupplungskörper und/oder über die Federelemente auf das Zwischenglied und von dort über den zweiten Kupplungskörper auf den Abtriebsflansch. Ausführungsbeispiele der Erfindung werden im Folgenden anhand der Zeichnungen näher erläutert. Es zeigen:
- Fig. 1:: Isometrische Ansicht einer erfindungsgemäßen Wellenkupplung;
- Fig. 2:: Explosionsdarstellung der Wellenkupplung;
- Fig. 3:: Erfindungsgemäße Wellenkupplung im Querschnitt;
- Fig. 4:: Kennlinie der erfindungsgemäßen Wellenkupplung;

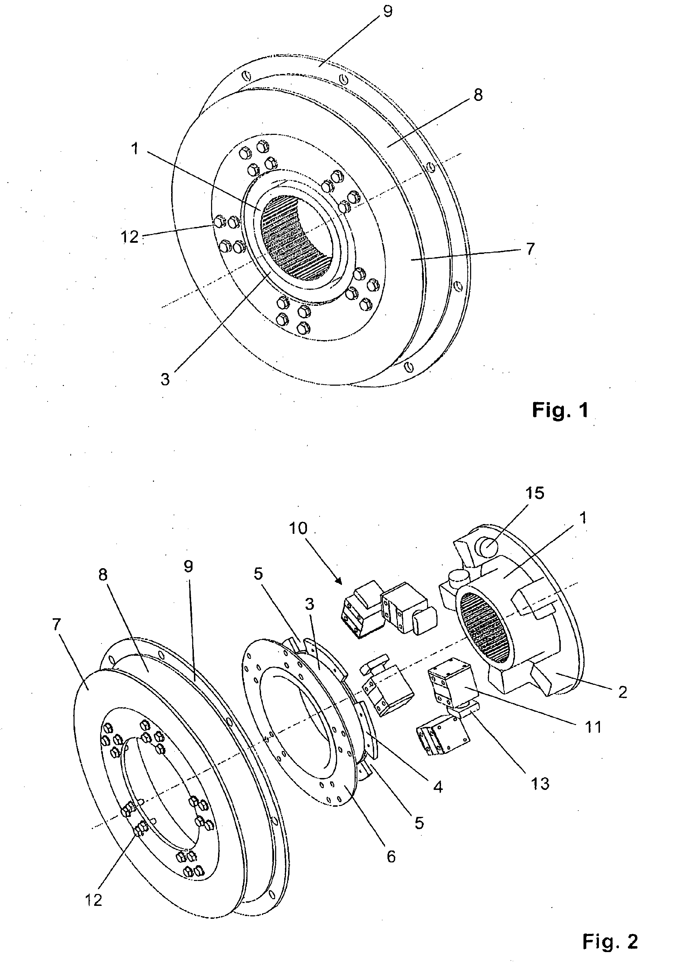

Die in den Figuren 1, 2 und 3 dargestellte Wellenkupplung weist als Antriebsflansch eine Nabe 1 mit Innenverzahnung auf. An die Nabe 1 sind Vorsprünge 2 (zum Beispiel durch Schmieden) angeformt. Ein erster Kupplungskörper 3, der aus Silikonmaterial besteht, ist mit einer ringförmigen Haltescheibe 4 verbunden, die in Umfangsrichtung mehrere Unterbrechungen 5 aufweist. In die Unterbrechungen 5 greifen die Vorsprünge 2 ein, so dass die Haltescheibe 4 bei einer Drehung der Nabe 1 mitgenommen wird. Weiterhin ist der Kupplungskörper 3 mit einem Zwischenglied 6 verbunden. Das Zwischenglied 6 ist ebenfalls als ringförmige Scheibe ausgebildet und wird mit einem Kopplungsglied 7, wiederum in Form einer Ringscheibe, verschraubt.

Das Kopplungsglied 7 ist seinerseits mit einem zweiten Kupplungskörper 8, der aus Gummimaterial besteht, verbunden (z.B. durch Vulkanisieren). Der zweite Kupplungskörper 8 ist schließlich mit einem Abtriebsflansch 9, abermals in Form einer Ringscheibe, verbunden.

Wie den Figuren 1 bis 3 weiterhin zu entnehmen ist, sind die Kupplungskörper 3 und 8 in Reihe geschaltet. Dabei ist das Zwischenglied 6 über den ersten Kupplungskörper 3 mit dem Antriebsflansch 1 und über den zweiten Kupplungskörper 8 mit dem Abtriebsflansch 9 verbunden. Die Drehmomentübertragung vom Antriebsflansch 1 auf den Abtriebsflansch 9 erfolgt so, dass das Drehmoment zunächst vom Antriebsflansch 1 über den ersten Kupplungskörper 3 auf das Zwischenglied 6 übertragen wird, und zwar unter relativer Verdrehung von Antriebsflansch 1 und Zwischenglied 6 entsprechend der Steifigkeit des Kupplungskörpers 3. Von dem Zwischenglied 6 (und dem damit starr verbundenen Kopplungsglied 7) erfolgt die Drehmomentübertragung weiter über den zweiten Kupplungskörper 8 auf den Abtriebsflansch 9, und zwar unter relativer Verdrehung von Zwischenglied 6 (und Kopplungsglied 7) und Abtriebsflansch 9 entsprechend der Steifigkeit des zweiten Kupplungskörpers 8.

Gemäß der Erfindung weisen die beiden Kupplungskörper 3 und 8 unterschiedliche Steifigkeiten auf. Der aus Silikon bestehende Kupplungskörper 3 ist deutlich weicher ausgelegt als der Kupplungskörper 8. Der erste Kupplungskörper 3 ist für den Schwach- und Teillastbereich vorgesehen, während der zweite Kupplungskörper 8 die Drehmomentübertragung im Volllastbereich besorgt.

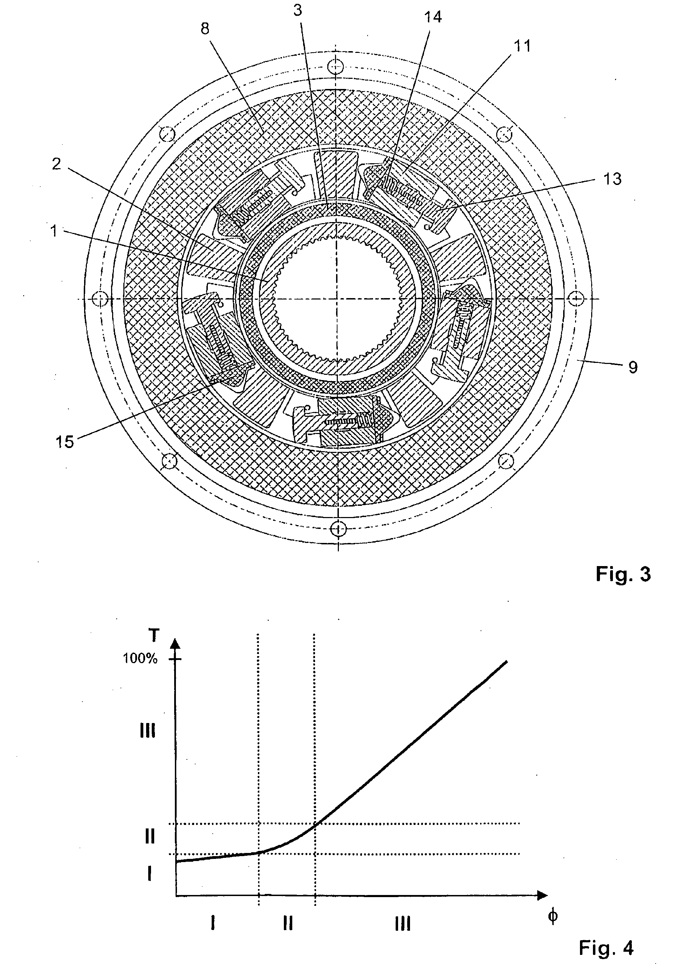

Weiterhin wird gemäß der Erfindung der relative Verdrehwinkel zwischen Antriebsflansch 1 und Zwischenglied 6 durch einen elastisch federnden Anschlag begrenzt. Dieser wird durch (bei dem Ausführungsbeispiel) fünf Federelemente 10 gebildet. Diese bestehen jeweils aus einem im Wesentlichen quaderförmigen Zylinder 11, der über jeweils 4 Schrauben 12 mit dem Zwischenglied 6 (bzw. dem Kopplungsglied 7) verbunden ist. Wie in den Figuren 2 und 3 zu erkennen ist, sind die Achsen der Zylinder 11 in Umfangsrichtung der Wellenkupplung ausgerichtet. In jedem Zylinder 11 ist ein Kolben 13 längsbeweglich geführt. Jeder Kolben 13 ist mit der Federkraft einer Schraubenfeder 14 beaufschlagt. Die Federkraft drängt den Kolben 13 in die maximal ausgefahrene Stellung, die in der Figur 3 gezeigt ist. Die Federelemente 10 weisen, durch entsprechende Anschläge am Zylinder 11 bzw. am Kolben 13, jeweils den Hub des Kolbens 13 begrenzende Endanschläge auf. Der maximale relative Verdrehwinkel zwischen Antriebsflansch 1 und Zwischenglied 6 ist erreicht, wenn die Kolben 13 der Federelemente 13 entgegen der Federkraft maximal in die Kolben 11 eingefahren sind (nicht dargestellt). Die Vorsprünge 2 wirken bei relativer Verdrehung der Nabe 1 und des Zwischenglieds 6 auf die Kolben 13 ein. Ab Erreichen eines Mindestwertes des über die Wellenkupplung übertragenen Drehmoments, das heißt ab einem Mindestwert des relativen Verdrehwinkels zwischen Nabe 1 und Zwischenglied 6 berühren die Vorsprünge 2 die endseitig verdickten Köpfe der Kolben 13. Ab diesem Mindestwert des Drehmoments ist der durch die Federelemente 10 gebildete elastische Anschlag in Funktion. Die Berührung der Vorsprünge 2 mit den Kolben 13 markiert den Übergang vom Schwachlastbereich zum Teillastbereich. Bei weiter zunehmendem Drehmoment werden die Kolben 13 der Federelemente 10 entgegen der Federkraft in die Zylinder 11 eingefahren. Dies findet statt, solange sich die Wellenkupplung im Teillastbereich befindet. Bei noch weiter ansteigendem Drehmoment erreichen die Kolben 13 ihre Endanschläge innerhalb der Zylinder 11. Dies markiert den Übergang vom Teillastbereich zum Volllastbereich. Über die am Endanschlag befindlichen Federelemente 10 ist nun der erste Kupplungskörper 3 vollständig überbrückt. Die Drehmomentübertragung erfolgt direkt von der Nabe 1 über die am Endanschlag befindlichen Federelemente 10 auf das Zwischenglied 6 bzw. das Koppelglied 7 und von dort über den zweiten Kupplungskörper 8 auf den Abtriebsflansch 9.

In den Figuren 2 und 3 sind zusätzliche Gummipuffer 15 dargestellt. Über diese Gummipuffer schlagen die Vorsprünge 2 an den Rückseiten der Kolben 11 an, wenn auf die Wellenkupplung ein Drehmoment entgegen der Vorzugsdrehrichtung angreift. Entgegen der Vorzugsdrehrichtung weist die dargestellte Wellenkupplung somit einen starren Anschlag zur Überbrückung des ersten Kupplungskörpers 3 auf, ähnlich wie in der oben erwähnten DE 10 2006 045 614 A1 beschrieben.

Die Figur 4 zeigt die Kennlinie der erfindungsgemäßen drehelastischen Wellenkupplung in Form eines Diagramms. In dem Diagramm ist das Drehmoment T gegen den relativen Verdrehwinkel Φ von Antriebsflansch und Abtriebsflansch aufgetragen. Bei geringen Verdrehwinkeln und entsprechend geringem Drehmoment zeigt die Kennlinie eine flache Steigung, was einer geringen Drehsteifigkeit der Kupplung entspricht. Dies entspricht dem Schwachlastbereich, der in der Figur 4 mit I bezeichnet ist. Bei zunehmendem Verdrehwinkel bzw. bei zunehmendem Drehmoment steigt die Kennlinie steiler an. In diesem Bereich kommen die Vorsprünge 2 mit den Kolben 13 der Federelemente 10 (s. Figuren 1 bis 3) in Berührung. In dem mit II in Figur 4 bezeichneten Teillastbereich sind die Federelemente 10 aktiv. Diese sind mit dem ersten Kupplungskörper 3 parallel geschaltet. Die Kennlinie wird kontinuierlich steiler, was einem stetigen Anwachsen der Drehsteifigkeit der Kupplung entspricht. Im Volllastbereich schließlich, der in der Figur 4 mit III bezeichnet ist, sind die Federelement 10 am Anschlag. Das bedeutet, dass der erste Kupplungskörper 3 vollständig überbrückt ist. In dem Volllastbereich 3 ist somit ausschließlich der zweite Kupplungskörper 8 zur Drehmomentübertragung aktiv. Dieser weist eine deutlich größere Steifigkeit auf als der erste Kupplungskörper 3. Dementsprechend hat die Kennlinie im Volllastbereich eine maximale Steigung.

## Patentansprüche

1. Drehelastische Wellenkupplung mit
- einem Antriebsflansch (1) und einem Abtriebsflansch (9), jeweils zum Verbinden der Wellenkupplung mit benachbarten Maschinenelementen,
- zwei in Reihe geschalteten elastischen Kupplungskörpern (3, 8) und
- einem Zwischenglied (6), das über den ersten Kupplungskörper (3) mit dem Antriebsflansch (1) und über den zweiten Kupplungskörper (8) mit dem Abtriebsflansch (9) verbunden ist,
wobei Drehmomente, unter relativer Verdrehung von Antriebsflansch (1) und Zwischenglied (6), vom Antriebsflansch (1) über den ersten Kupplungskörper (3) auf das Zwischenglied (6) und von dort, unter relativer Verdrehung von Zwischenglied (6) und Abtriebsflansch (9), vom Zwischenglied (6) über den zweiten Kupplungskörper (8) auf den Abtriebsflansch (9) übertragen werden, wobei die beiden Kupplungskörper (3, 8) unterschiedliche Steifigkeiten aufweisen, wobei der relative Verdrehwinkel zwischen Antriebsflansch (1) und Zwischenglied (6) durch einen elastisch federnden Anschlag der Wellenkupplung begrenzt ist
**dadurch gekennzeichnet, dass** der elastisch federnde Anschlag durch mehrere Federelemente (10) gebildet ist, die jeweils einen mit dem Zwischenglied (6) starr verbundenen Zylinder (11), dessen Achse im Wesentlichen in Umfangsrichtung der Wellenkupplung ausgerichtet ist, und einen in dem Zylinder (11) längs beweglich geführten, mit Federkraft beaufschlagten Kolben (13) umfassen.

2. Wellenkupplung nach Anspruch 1, **dadurch gekennzeichnet, dass** die Federelemente (10) jeweils zwei den Hub des Kolbens (13) begrenzende Endanschläge aufweisen.

3. Wellenkupplung nach Anspruch 2, **dadurch gekennzeichnet, dass** die Federkraft den Kolben (13) in eine maximal ausgefahrene Stellung drängt.

4. Wellenkupplung nach Anspruch 3, **dadurch gekennzeichnet, dass** der maximale relative Verdrehwinkel zwischen Antriebsflansch (1) und Zwischenglied (6) erreicht ist, wenn die Kolben (13) der Federelemente (10) entgegen der Federkraft maximal eingefahren sind.

5. Wellenkupplung nach einem der Ansprüche 2 bis 4, **gekennzeichnet durch** mehrere mit dem Antriebsflansch (1) starr verbundene Vorsprünge (2), die auf die Kolben (13) der Federelemente (10) einwirken.

6. Wellenkupplung nach Anspruch 5, **dadurch gekennzeichnet, dass** die Vorsprünge (2) erst ab Erreichen eines Mindestwertes des über die Wellenkupplung übertragenen Drehmoments auf die Kolben (13) einwirken.

7. Wellenkupplung nach Anspruch 6, **dadurch gekennzeichnet, dass** der relative Verdrehwinkel zwischen Antriebsflansch (1) und Zwischenglied (6) bei Erreichen des Mindestwertes des Drehmoments bis zu 10%, vorzugsweise bis zu 20%, besonders bevorzugt bis zu 50% des maximalen relativen Verdrehwinkels beträgt.

8. Wellenkupplung nach einem der Ansprüche 2 bis 7, **dadurch gekennzeichnet, dass** die Kolben (13) der Federelemente (10) bei zunehmendem Drehmoment zunehmend gegen die Federkraft in die Zylinder (11) hinein geschoben werden.

9. Wellenkupplung nach einem der Ansprüche 2 bis 8, **dadurch gekennzeichnet, dass** der erste und der zweite Kupplungskörper (3, 8) koaxial zur Drehachse der Wellenkupplung angeordnet sind, wobei sich der erste Kupplungskörper (3) radial innerhalb des zweiten Kupplungskörpers (8) befindet und wobei die Federelemente (10) radial zwischen den Kupplungskörpern (3, 8) angeordnet sind.

10. Wellenkupplung nach einem der Ansprüche 1 bis 9, **dadurch gekennzeichnet, dass** die Drehsteifigkeit der Wellenkupplung bei zunehmendem Drehmoment stetig von einem der Steifigkeit des ersten Kupplungskörpers (3) entsprechenden Wert in einen der Steifigkeit des zweiten Kupplungskörpers (8) entsprechenden Wert übergeht.

11. Wellenkupplung nach einem der Ansprüche 1 bis 10, **dadurch gekennzeichnet, dass** die Drehsteifigkeit der Kupplung in einem Schwachlastbereich (1) der Steifigkeit des ersten Kupplungskörpers (3) und einem Volllastbereich (III) der Steifigkeit des zweiten Kupplungskörpers (8) entspricht, wobei der elastisch federnde Anschlag nur in einem zwischen dem Schwachlastbereich (I) und dem Volllastbereich (III) liegenden Teillastbereich (II) bis zum Erreichen des maximalen relativen Verdrehwinkels von Antriebsflansch (1) und Zwischenglied (6) wirksam ist.

## Claims

1. Torsionally elastic shaft coupling consisting of
- a driving flange (1) and a driven flange (9), each for connecting the shaft coupling to adjacent machinery elements,
- two elastic coupling bodies (3, 8) arranged in series, and
- an intermediate member (6) which is connected via the first coupling body (3) to the driving flange (1) and via a second coupling body (8) to the driven flange (9),
wherein, by the relative rotation of driving flange (1) and intermediate member (6), torques are transmitted from the driving flange (1) via the first coupling body (3) to the intermediate member (6) and from there, by relative rotation of intermediate member (6) and driven flange (9), from the intermediate member (6) via the second coupling body (8) to the driven flange (9), wherein the two coupling bodies (3, 8) have different stiffness characteristics, wherein the relative torsional angle between driving flange (1) and intermediate member (6) being limited by an elastically resilient stop element of the shaft coupling,
**characterized in that** the elastically resilient stop element comprises several spring elements (10) each of which being provided with a cylinder (11) which has a rigid connection with the intermediate member (6) and an axis extending primarily in the circumferential direction of the shaft coupling, and with a spring-loaded piston (13) which is guided within said cylinder (11) so as to be longitudinally movable.

2. Shaft coupling according to claim 1, **characterized in that** the spring elements (10) are each provided with two end stops limiting the stroke of the piston (13).

3. Shaft coupling according to claim 2, **characterized in that** the spring force causes piston (13) to be moved into a maximally extended position.

4. Shaft coupling according to claim 3, **characterized in that** the maximum relative torsional angle between driving flange (1) and intermediate member (6) is reached when the pistons (13) of the spring elements (10) moving in against the spring force have reached their maximum end position.

5. Shaft coupling according any one of the claims 2 to 4, **characterized by** several projections (2) rigidly connected with the driving flange (1), said projections acting on the pistons (13) of the spring elements (10).

6. Shaft coupling according to claim 5, **characterized in that** the projections (2) only act on the pistons (13) when a minimum torque rate has been reached in the torque-transmitting shaft coupling.

7. Shaft coupling according to claim 6, **characterized in that** the relative torsional angle between driving flange (1) and intermediate member (6) amounts up to 10%, preferably up to 20%, especially preferred up to 50% of the maximum relative torsional angle when the minimum torque rate has been reached.

8. Shaft coupling according to any one of the claims 2 to 7, **characterized in that** an increasing torque rate causes the pistons (13) of the spring elements (10) to be pushed against the spring force further into the cylinders (11).

9. Shaft coupling according to any one of the claims 2 to 8, **characterized in that** the first and the second coupling body (3, 8) are arranged coaxially to the rotational axis of the shaft coupling, wherein the first coupling body (3) being radially located within the second coupling body (8) and wherein the spring elements (10) being radially arranged between the coupling bodies (3, 8).

10. Shaft coupling according any one of the claims 1 to 9, **characterized in that** the torsional stiffness of the shaft coupling at increasing torque changes over in a constant fashion from the stiffness characteristic of the first coupling body (3) to a stiffness characteristic that corresponds to that of the second coupling body (8).

11. Shaft coupling according to any one of the claims 1 to 10, **characterized in that** the torsional stiffness of the coupling in a low load range (I) corresponds to the stiffness of the first coupling body (3) and in a full load range (III) corresponds to the stiffness of the second coupling body (8), wherein the elastically resilient stop elements being effective only in a partial load range (II) existing between the low load range (I) and the full load range (III) until the maximum relative torsional angle between driving flange (1) and intermediate member (6) has been reached.

## Revendications

1. Embrayage d'arbre élastique rotatif avec
- une bride d'entrée (1) et une bride de sortie (9), pour relier l'embrayage d'arbre avec des éléments de machines adjacents,
- deux corps d'embrayage (3, 8) élastiques connectés en série et
- un organe intermédiaire (6), qui est relié, par l'intermédiaire de premier corps d'embrayage (3), avec la bride d'entrée (1) et, par l'intermédiaire du deuxième corps d'embrayage (8), avec la bride de sortie (9),
deux couples, sous l'effet de la torsion relative de la bride d'entrée (1) et de l'organe intermédiaire (6), étant transmis de la bride d'entrée (1) par l'intermédiaire du premier corps d'embrayage (3) vers l'organe intermédiaire (6) et de là, sous l'effet de la torsion relative de l'organe intermédiaire (6) et de la bride de sortie (9), de l'organe intermédiaire (6) par le deuxième corps d'embrayage (8) vers la bride de sortie (9), les deux corps d'embrayage (3, 8) présentant des rigidités différentes, l'angle de torsion relatif entre la bride d'entrée (1) et l'organe intermédiaire (6) étant limité par une butée élastique de l'embrayage d'arbre,
**caractérisé en ce que** la butée élastique est constituée de plusieurs éléments élastiques (10) qui comprennent chacun un cylindre (11) relié de manière rigide à l'organe intermédiaire (6), dont l'axe est orienté globalement dans la direction de la circonférence de l'embrayage d'arbre, et un piston (13) guidé de manière mobile longitudinalement dans le cylindre (11) et sur lequel s'applique une force élastique.

2. Embrayage d'arbre selon la revendication 1, **caractérisé en ce que** les éléments élastiques (10) comprennent chacun des butées finales limitant la course du piston (13).

3. Embrayage d'arbre selon la revendication 2, **caractérisé en ce que** la force élastique pousse le piston (13) vers une position sortie au maximum.

4. Embrayage d'arbre selon la revendication 3, **caractérisé en ce que** l'angle de torsion relatif maximal entre la bride d'entrée (1) et l'organe intermédiaire (6) est atteint lorsque les pistons (13) des éléments élastiques (10) sont rentrés au maximum contre la force élastique.

5. Embrayage d'arbre selon l'une des revendications 2 à 4, **caractérisé par** plusieurs saillies (2), reliées de manière rigide avec la bride d'entrée (1), qui agissent sur les pistons (13) des éléments élastiques (10).

6. Embrayage d'arbre selon la revendication 5, **caractérisé en ce que** les saillies (2) n'agissent que lorsqu'une valeur minimale du couple transmis aux pistons (13) par l'embrayage d'arbre est atteinte.

7. Embrayage d'arbre selon la revendication 6, **caractérisé en ce que** l'angle de torsion relatif entre la bride d'entrée (1) et l'organe intermédiaire (6) est, lorsque la valeur minimale du couple est atteinte jusqu'à 10%, de préférence jusqu'à 20%, de préférence jusqu'à 50% de l'angle de torsion relatif maximal.

8. Embrayage d'arbre selon l'une des revendications 2 à 7, **caractérisé en ce que** les pistons (13) des éléments élastiques (10) sont poussés de plus en plus à l'intérieur des cylindres (11) contre la force élastique lorsque le couple augmente.

9. Embrayage d'arbre selon l'une des revendications 2 à 8, **caractérisé en ce que** le premier et le deuxième corps d'embrayage (3, 8) sont disposés de manière coaxiale à l'axe de rotation de l'embrayage d'arbre, le premier corps d'embrayage (3) se trouvant radialement à l'intérieur du deuxième corps d'embrayage (8) et les éléments élastiques (10) étant disposés radialement entre les corps d'embrayage (3, 8).

10. Embrayage d'arbre selon l'une des revendications 1 à 9, **caractérisé en ce que** la rigidité de rotation de l'embrayage d'arbre passe, lorsque le couple augmente, de manière progressive, d'une valeur correspondant à la rigidité du premier corps d'embrayage (3) à une valeur correspondant à la rigidité du deuxième corps d'embrayage (8).

11. Embrayage d'arbre selon l'une des revendications 1 à 10, **caractérisé en ce que** la rigidité de rotation de l'embrayage correspond, dans une zone de faible charge (1), à la rigidité du premier corps d'embrayage (3) et, dans une zone de pleine charge (III) de la rigidité du deuxième corps d'embrayage (8), la butée élastique étant efficace uniquement dans une zone de charge partielle (II) se trouvant entre la zone de faible charge (I) et la zone de pleine charge (III) jusqu'à ce que l'angle de torsion relatif maximal entre la bride d'entrée (1) et l'organe intermédiaire (6) soit atteint.
